# EUROPEAN PATENT SPECIFICATION

(11) **EP 2 819 908 B1**
(45) Date of publication and mention of the grant of the patent: **31.10.2018**
(21) Application number: 13708865.4
(22) Date of filing: 26.02.2013
(51) Int. Cl.: B62B 3/02, B62B 3/12

(54) **A COMBINATION GOLF TROLLEY AND GOLF BAG**
KOMBINATION AUS GOLFWAGEN UND GOLFTASCHE
COMBINAISON DE CHARIOT DE GOLF ET DE SAC DE GOLF

(30) Priority: 28.02.2012 GB 201203424; 11.12.2012 GB 201222264
(43) Date of publication of application: 07.01.2015
(73) Proprietor: Sutton, Joseph Henry, Swindon, Wiltshire SN26 8BZ (GB)
(72) Inventor: Sutton, Joseph Henry, Swindon, Wiltshire SN26 8BZ (GB)
(74) Representative: JENSEN & SON
(86) International application number: PCT/GB2013/000077
(87) International publication number: WO 2013/128153

(56) References cited:
- WO-A2-02/062429
- WO-A2-2006/132673
- US-A- 6 050 592
- US-A1- 2004 150 176

## Description

The present invention relates to a combination of a golf trolley and a golf bag adapted to carry a set of clubs, the arrangement being such that the combination can be moved from a collapsed, transport or storage condition to an operational condition where it can be wheeled about a golf course.

A conventional golf bag for carrying a set of golf clubs is an elongate generally cylindrical shape and is formed of a semi-rigid material open at one end for receiving the clubs. The open end is divided into an array of openings each adapted to receive one golf club. There is a conflicting requirement that the bag should be as light and compact as possible for easy conveyance but on the other hand, it needs to be large enough to accommodate a full set of clubs in such a way that it is possible to easily retrieve a desired club at any time. The conventional standard size bag used by the majority of club players lies within an envelope approximately 900 mm long by 300 mm by 300 mm. Professional golfers often use a larger bag but these are usually carried by a professional caddie.

In the known type of golf bag, the bag is adapted to be carried round the golf course by the golfer by means of a shoulder strap. However, it has been determined that carrying a set of golf clubs in this manner can easily add one or two strokes to a golfer's score simply because of the tiring effect of carrying the clubs. There is therefore a demand for a lightweight trolley comprising a pair of laterally spaced wheels pulled along by a handle. There is also an increasing demand for such trolleys to be driven by an electric motor to, again, reduce the exertion of the golfer in moving his clubs about the course.

There are a number of known types of golf trolley or pull cart which basically fall into two types. The first is a fixed or rigid golf container for clubs and other accessories which is mounted on two or four wheels and is generally powered by an electric motor. These constructions are relatively large and heavy and are difficult to manage, store and transport. Some of this type of trolleys are designed to be partially collapsed but even in the collapsed state the trolleys are still large and cumbersome with protruding parts. It is extremely difficult to transport such trolleys and bags in the boot of a normal car.

A further complication arises since golfers invariably have to drive to a golf course, as these are usually remote from public transport, and a golf bag takes up a large amount of room in the boot of a car; a transport problem frequently arises when two or more golfers share the same car. This problem is exacerbated if, additionally, a trolley is required to be transported by each golfer. It is a common phenomenon when assessing the desirability of a new vehicle to ascertain how many golf bags can be accommodated in the boot or luggage compartment. There is therefore a clear commercial requirement for golf bags not to exceed the traditional envelope.
For example, US Patent Application 2005/0275175 discloses a sports or golf bag with an integral transportation system having a container with an internal structural system for rigidity and wheels adapted to be placed in a recessed stowage compartment located in a lower extension of the golf bag. The wheels of the trolley en route between an open and closed position by means of a complex system incorporating gears and wires. The overall result is that the bag must inevitably be significantly larger than the standard type of golf bag.

A combination of a golf trolley and a golf bag according to the preamble of claim 1 is also known from WO 2006/132673 A2. The present invention seeks to provide a combined golf trolley and a golf bag which overcomes these problems by providing such a combination which in the collapsed condition lies substantially within the envelope of a conventional golf bag.

According to the present invention there is provided combination of a golf trolley and a golf bag adapted to carry a set of clubs, the golf trolley having a chassis member having a generally planar surface adapted to support or form part of a base member of the golf bag, a handle connected to a handle column adapted to be slidable longitudinally relative to the chassis member along a path between an operational and a collapsed position, the golf trolley having a pair of substantially co-axial spaced wheels each connected to the chassis member by a linkage arrangement so as to be movable between an operational position and a collapsed position adjacent to the chassis member, each linkage arrangement having a further link connecting an intermediate point on the respective linkage arrangement to a lower end of the handle column, the linkage arrangement being such that when the handle is lowered to the collapsed position each further links draws the respective linkage arrangement to a point wherein each linkage arrangement and each further link lies substantially parallel to the generally planar surface and the wheels are in a closed position adjacent to the chassis member overlapping opposite sides of the golf bag, wherein a lateral cross section of the golf bag has a tapered section intermediate a length of the golf bag leading to a lower section of reduced cross section, the substantially co-axial spaced wheels in their collapsed position being positioned adjacent the reduced cross section part of the bag overlapping sides of the bag so as to lie substantially within an overall envelope of the golf bag the said combination being characterised in that the golf bag is movable away from the chassis member so that, when the golf trolley is in the operational position, an upper open end of the golf bag is clear from the handle. The above combination provides an improvement over known golf trolleys and golf bags because it performs both the function of a golf bag and a golf trolley but only uses the space typically associated with a golf bag. Advantageous features are defined in the subclaims.
Preferred embodiments of the present invention will now be described by way of example with reference to the accompanying drawings, in which:-
Figure 1 shows a side view of a first embodiment of a combined golf trolley and a golf bag,
Figure 2 shows a perspective view of the chassis part of the first embodiment of the golf trolley,
Figure 3 shows a rear view of the first embodiment of the golf trolley showing the wheels in their extended position,
Figure 4 shows a front view of the first embodiment of the trolley showing the shape of the golf bag,
Figure 5 shows a side view of the first embodiment of the golf trolley and golf bag with the trolley in its closed position without wheel covers in place,
Figure 6 shows a view corresponding to Figure 5 with the trolley in its operational position,
Figure 7 shows a schematic side view of the wheel support linkage in the folded position,
Figure 8 shows a rear view of the arrangement in Figure 7,
Figure 9 shows a side view of a second embodiment of a combined golf trolley and a golf bag,
Figure 10 shows a side view of the second embodiment of the golf trolley,
Figure 11a shows an outer enlarged view of the guide track and sliding element of the chassis of Figure 11,
Figure 11b shows an inner enlarged view of the guide track and sliding element of the chassis of Figure 11 in the handle column,
Figure 12 shows a side view of the sliding member engaging the rod and the rod causing the lift arm to push the projecting arm,
Figure 13 shows an enlarged view of the projecting arm of the chassis of Figure 11,
Figure 14a shows the second embodiment of the golf trolley in a closed position,
Figure 14b shows the second embodiment of the golf trolley in an intermediately open position,
Figure 14c shows the second embodiment of the golf trolley in an almost fully open position,
Figure 15 shows a wirelessly controlled wheel which can be used with the golf trolley, and
Figure 16 shows a cutaway view of the wheel of Figure 15.

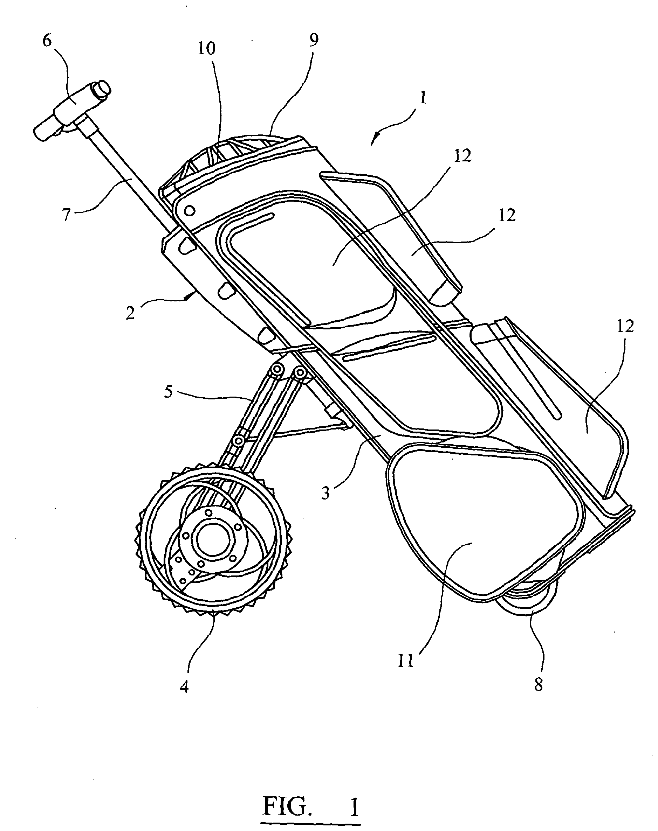

Referring to Figure 1, there is shown a product in the form of a combination golf bag and golf trolley in an extended operational position for pulling around a golf course. The product consists of a trolley 2 having a chassis 3 carrying a pair of coaxial wheels 4 which are connected to the chassis by means of a twin linkage arrangement 5 consisting of two links, substantially in parallel, which will be described in greater detail hereinafter. The trolley 2 has a handle 6 by which the trolley 2 is pulled along, the handle 6 being connected to the trolley 2 by means of a handle column 7 slidable longitudinally relative to the chassis 3 between a collapsed position for transport and storage and an extended position, as shown, for use.
At its lower end, the chassis 3 carries a ground engaging member which consists of a wheel 8 rotatably mounted at the lower end of the chassis 3. The bag 1 is designed essentially in the manner of a conventional golf bag comprising an elongate bag open at its upper end 9 to receive golf clubs and having an array of dividers 10 which divide the opening into a series of openings each adapted to receive a golf club, with the handle of the club being inserted first. The bag 1 is dimensioned to generally fall within an envelope approximately 900 mm long by 300 mm by 300 mm. On its exterior at its lower end, the bag 1 has a pair of detachable covers 11, which can enclose the wheels when the container is in the collapsed, stowed position, and other exterior pockets which may be detachable and are designed to accommodate accessories such as gloves and golf balls.

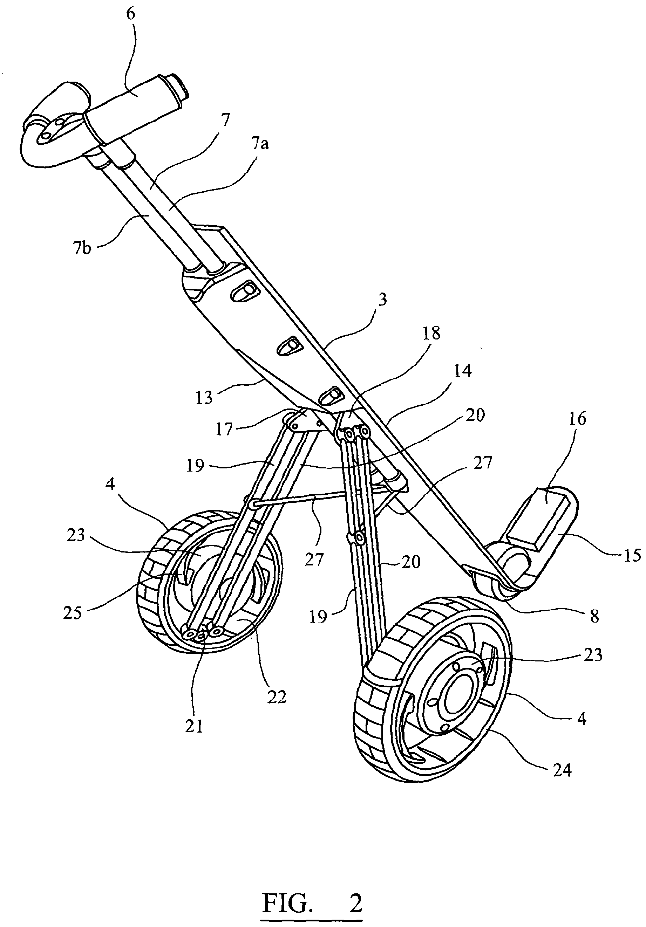

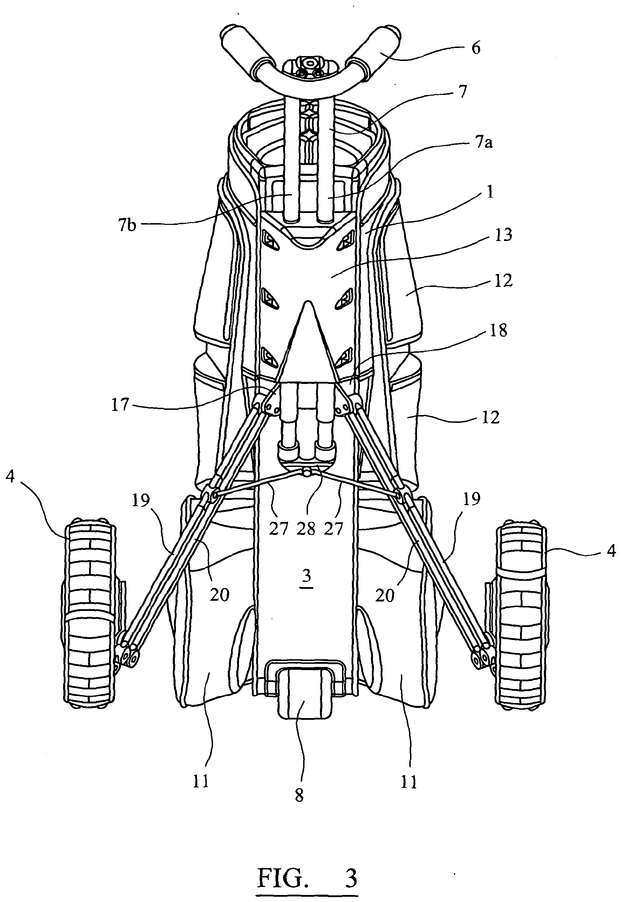

The bag is designed, in this product, to be an integral part of the combination but in an alternative form it is detachable from the trolley and is normally held in place by suitable fastening means such as press studs or hook and pile fastening.
Referring now to Figures 2 and 3, there is shown respectively a rear perspective view of the trolley part of the combination, and a rear view of the combination. The chassis 3 comprises a main body part 13 and an elongate base plate 14 which extends downwardly to the ground engaging member, the wheel 8, and then carries an extension 15 which provides a stop for the bag and also provides a mounting point for a battery unit 16 when the trolley is motorised. The wheel 8 projects beyond the lower most part of the base plate 14, 15 so that when the trolley is located in an upright position it can be wheeled along on the single wheel 8 as well as the two co-axial wheels 4.

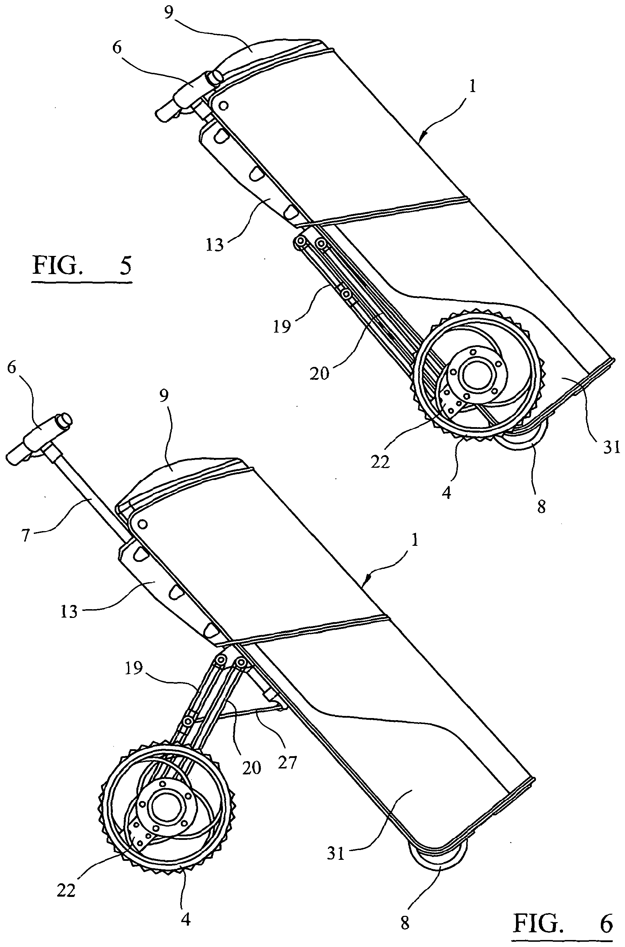

As can be seen, the handle 7 consists of a generally curved or arcuate member which is arranged to nest neatly in the top periphery of the bag when the trolley is collapsed, as shown later in Figure 5. The handle column 7 comprises two shafts 7a and 7b, which are slidable in the chassis part 13 longitudinally, the shafts 7a, 7b extending through the chassis part 13 to extend some way below the chassis part 13. The shafts thus provide a stable inflexible connection between the handle 7 and the remainder of the trolley to facilitate its being pulled around a golf course.

As can be seen, each wheel 4 is connected to a bracket 17, 18 respectively, which are secured to the chassis 13, through a pair of twin links 19, 20 which are substantially parallel. The links 19, 20 are secured to their respective bracket 17 or 18 via a pivotal connection. At their lower ends, the twin links 19, 20 are connected, spaced apart, to a bracket 21 by pivotal connections and the bracket 19 itself is connected to a lug 22 extending from a hub 23 of the wheel 4. The lug 22 extends generally radially from the main body of the hub 23 and is inclined axially in a direction away from the other wheel 4 and downwardly towards the ground when the wheels are extended so that the linkage connection lies substantially within the profile of the wheel rim 24.

Each wheel 4 consists of a one-piece plastics moulding comprising the hub 23, incorporating the lug 22, and the rim 24 being joined to the hub by a plurality of curved spokes 25. In one form of the wheel, the spokes 25 have a degree of resilience to provide a degree of protection from jolts being passed up to the handle. Each tyre has a tyre tread 26 formed of a plastics or synthetic rubber material which is formed on a long roll and appropriate lengths are cut off and bonded to the wheel rim 24 to form a tread pattern. In one form a plurality of such short strips are needed to form the complete tread.

In another form of the invention, the trolley is motorised and in this form an electric motor is located in one or both of the wheels 4 which are connected to a power source in the form of the battery 16. A battery charger may be incorporated on the trolley which can be easily plugged into a source of electricity.

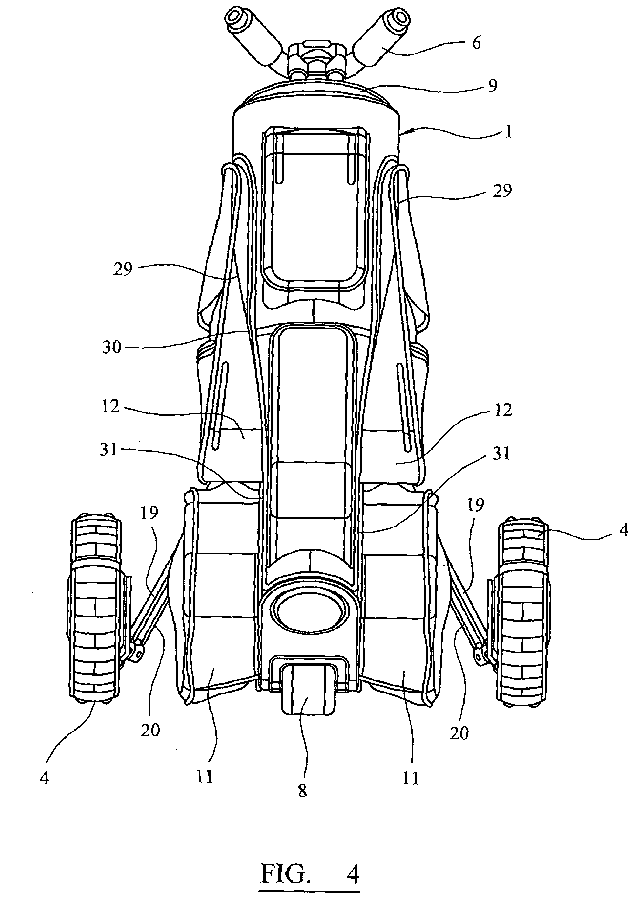

Each of the outermost one of the links, the links 19, is pivotally connected to the lower point of the handle column 7 by a connecting link 27, the links 27 being connected to a bracket 28 secured to the lower most parts of the shafts 7a, 7b forming the handle column 7. In Figure 3, it can be seen that the brackets by which the twin linkage arrangements 19, 20 are secured to the chassis 13 are inclined at a slight angle so that the two links of the linkages are at a slight angle from the mid-axis of the trolley and are similarly joined to the hub 23 at a slight angle. This particular arrangement of the mounting of the links 19, 20 assists in moving the wheels to the collapsed position, relatively close together in a very compact manner. This is further assisted by the location of the lug 22 within the wheel profile which, again, facilitates the wheels being drawn in closer together. As can be seen in Figure 4 the design of the lug 22 and its movement caused by the use of the parallel linkage enables the wheel 4 to be drawn into the bag 1 with its axis of rotation located inwardly of the linkage arrangement 19, 20 so that the wheel is drawn closer in to the bag to overlap the bag to a greater extent than would be the case if the links were connected directly to the hub 23.

Referring now to Figure 4, there is shown a front view of the product from which the outline of the golf bag can be clearly seen. The bag has a main body 29 having a cross-section which lies just within the overall envelope of 300 mm by 300 mm which, as described previously, is open at the top to receive golf clubs. The bag then has a middle portion 30 which is an inwardly tapered section leading to a narrower lower part 31 of the bag having a reduced cross section. The cross-section of this lower most part 31 is sufficient to accommodate the handles of a full set of golf clubs whilst the upper main body part 29 which is the standard conventional size easily accommodates the golf clubs and their heads in the conventional manner. In an alternative form, the sides of the lowermost part 31 are flexible and are such as to expand outwardly as the wheels are deployed.

In this way, when the trolley is collapsed, the two wheels are drawn in to lie adjacent to the narrower lower part of the bag and thus lie within the overall envelope of a conventional bag. As shown, the bag includes detachable covers 11 to enclose the wheels during transportation.

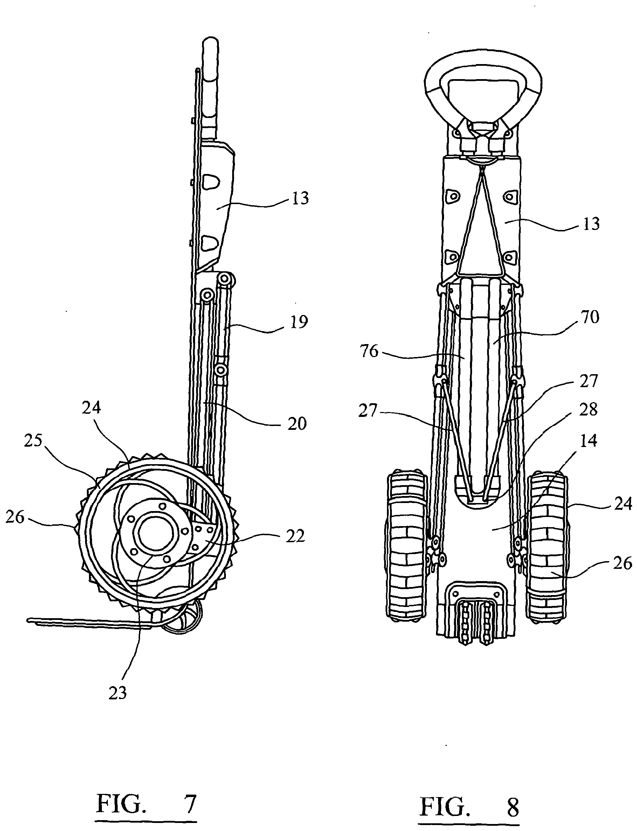

Referring now to Figures 5 to 8, they show a side view of the product with the wheel covers 11 removed to show the position of the wheels 4 in the closed position, (Figures 5 and 7), in which the links 19, 20 of the twin linkage arrangements 5 and the link 27 connecting these twin linkage arrangements 5 to the handle column 7 lie juxtaposed substantially parallel to the underside of the chassis base 14. In this position, the linkage 5 is neatly stowed without impinging on the bag 1 or reducing the capacity of the bag 1. Furthermore, as can be seen particularly clearly in Figure 7, the provision of and the positioning of the lug 22 for mounting the wheels on the linkage 5, the wheel lies in a much greater overlapping position with the sides of the bag 1 than would be the case were the links secured to the axis as in a conventional trolley.
To move the product from the extended operational position as shown in Figures 1, 4, and 6, to the closed position, it is merely necessary to push the handle down in one single linear movement to the closed position, at shown in Figure 5. In this position the curved handle 6 is nested in or juxtaposed to the open end 9 of the bag 1 so as to lie within the normal envelope and, as the lower most part of the handle column 7a, 7b is pushed downwardly the links 27 draw the twin linkage arrangements 19, 20 inwardly until all the links lie substantially parallel and adjacent to the narrower part 31 of the bag. This narrow part leaves room for the wheels to lie adjacent the sides of the narrow part 31 of the bag, thus falling substantially within the normal envelope.
If the wheels 4 are dirty or muddy, they can then be enclosed by the detachable covers 11 for transport in the boot of a car. In this way, the same number of golf bags can be accommodated as conventional golf bags. This compactness and the relatively light weight of the trolley as a consequence of the relative lightweight and simplicity brought about by the precise construction of the wheel mounting mechanism utilising the parallel twin links 19, 20 and the shaped hub 23 with the mounting lug 22 ensures that transportation of the product is no more difficult than a standard golf bag and also does not attract extra airline charges due to excessive size and weight.

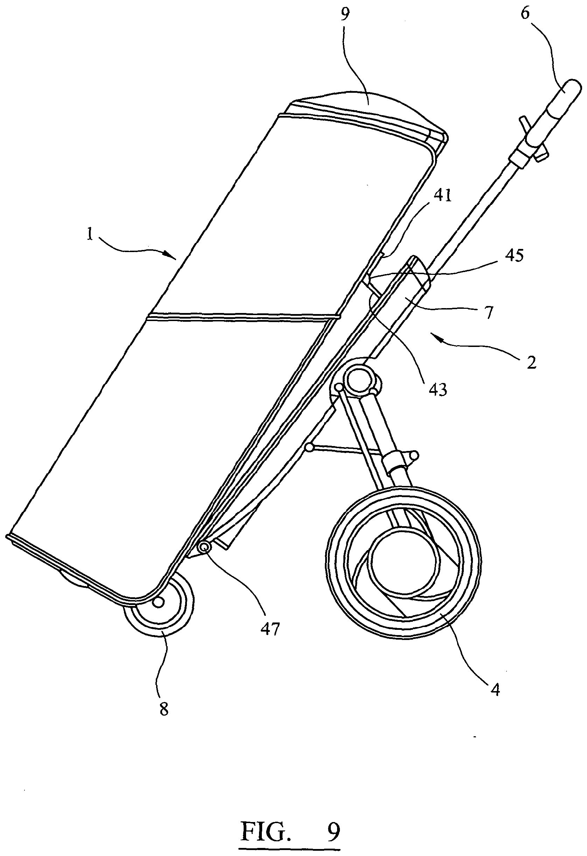

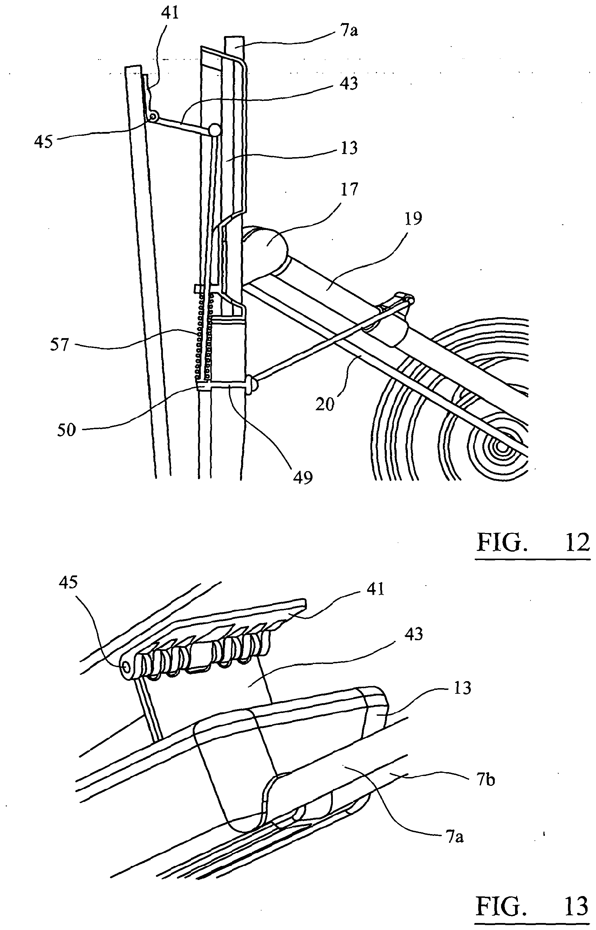

Referring now to Figure 9, there is shown an embodiment of a combination golf bag 1 and golf trolley 2 having most of the features in which like references refer to like parts described in relation to the combination golf bag 1 and golf trolley 2 of Figures 1 to 8. In this embodiment, a lifting plate 41 and a projecting arm 43 are arranged to pivot the top of the golf bag 1 away from the shafts 7a, 7b when the trolley 2 is in the operational position so that there is a gap between the open end of the golf bag 1 and the chassis 3. This embodiment has the advantage that the handle 6 is clear from the upper end 9 of the golf bag 1 to facilitate the removal and replacement of clubs into and out of the bag. As shown, the projecting arm 43 is pivotable in relation to the lifting plate 41 around a hinge 45 so that in the collapsed position the projecting arm 43 lies flush with the back of the bag below the lifting plate 41. As shown in Figure 12, the handle column 7 includes a rod 53 which is secured by a pivotable connection to the free end of the projecting arm 43 so that when the projecting arm 43 is in the extended position the free end of the projecting arm 43 and, thus, the handle column 7 is pivotable from the golf bag 1. A second hinge 47 is provided to pivotably secure the lower rear of the golf bag 1 to the base of the handle column 7.

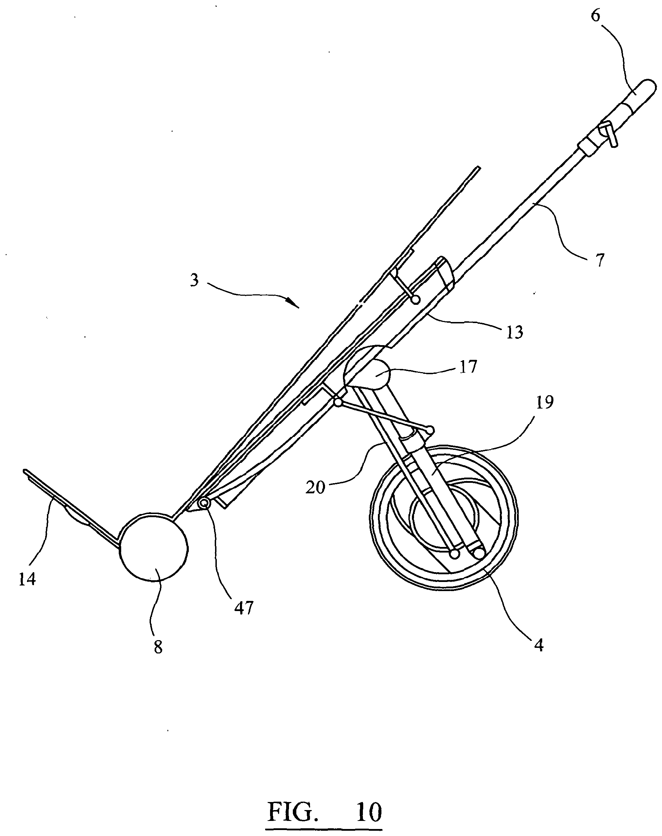

Referring now to Figure 10, there is shown a rear perspective view of the embodiment of the combination. In this embodiment, the chassis 3 also comprises a main body part 13 and a ground engaging member, wheel 8, the main body part 13 incorporates an elongate base plate 14 which provides a base for the golf bag 1. The wheel 8 projects beyond the lower most part of the base plate 14 so that when the golf trolley 2 is located in an upright position it can be wheeled along on the single wheel 8 as well as the two co-axial wheels. In contrast with the first embodiment, the handle column 7 is attached the main body part 13 and a back plate is attached to the rear part of the golf bag. The pivoting means, projecting arm 43 and hinge 45, enable the handle column to lift the back plate and therefore the golf bag 1. The handle column 7 comprises two shafts 7a and 7b, which are slidable in the handle column 7. Equally, each one of the two coaxial wheels 4 is connected to a bracket 17, 18 respectively, which is secured to the main body part 13 by a pair of twin links 19, 20 secured to a respective bracket 17, 18 via a pivotal connection. The handle 6 also includes a generally arcuate member arranged to nest neatly in the top periphery of the golf bag 1 when the golf trolley 2 is collapsed but to be vertically spaced apart from the top periphery of the golf bag 1 when the golf trolley is in the operational position so that access to any golf clubs carried by the golf bag 1 and to the golf bag 1 itself is not impeded by any part of the handle 6.

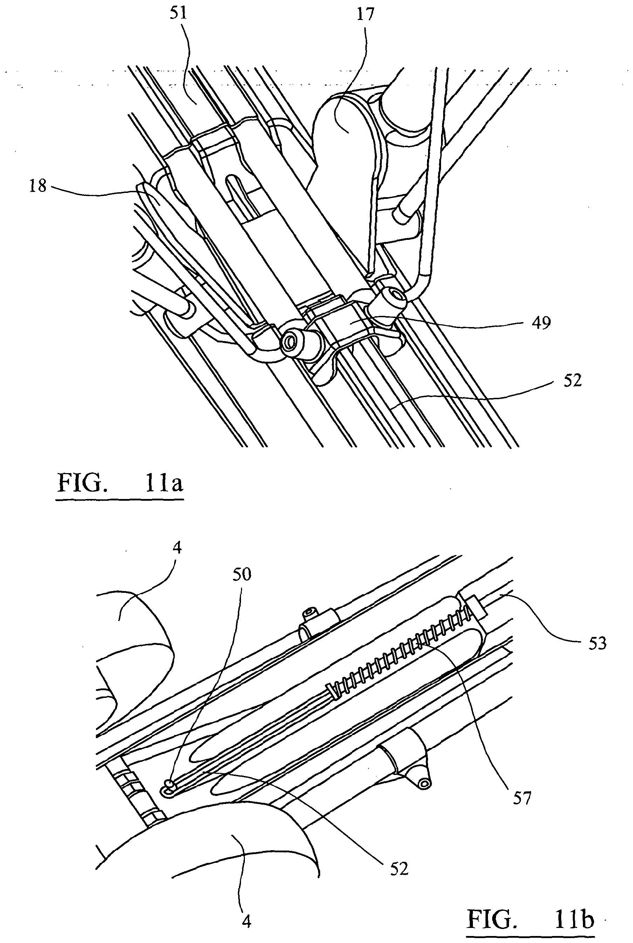

Referring now to Figures 11a, 11b and 12, the base of the slidable shafts 7a, 7b is secured to a sliding member 49 while a guide track 51 is provided on the chassis 3 to allow the sliding member 49 to slide along the guide track 51 so that the slidable shafts 7a, 7b slide in relation to the main body part 13. Thus, a further advantage of this embodiment is that the slidable shafts 7a, 7b slide on the main body part 13 unobstructed by any golf clubs or the golf bag 1. The guide track 51 provides an elongate path longitudinally and centrally located on the lower rear of the handle column. A longitudinal opening 52 is provided along the guide track 51 to allow a lug 50 projecting from the central lower portion of the sliding member 49 through the opening 52 and into the internal space provided by the main body part 13 so that, in use, the lug 50 slides along the opening 52. The sliding member 49 is arranged to receive, on its upper portion, the slidable shafts 7a, 7b; the shafts 7a, 7b are therefore slidably located on either side of the guide track 51. The sliding member 49 further comprises additional apertures to receive twin links 19, 20. The sliding member 49 may be made from any suitable material such as [material]. In use, the lug 50 of the sliding member 49 slides along the elongate opening 52 towards the end of the guide track 51 and, as it reaches the rod 53; a flange on the lug 50 engages the rod 53 so that the sliding motion of the sliding member 49 pushes the rod 53 upwards. A coil spring 57 is provided in the last portion of the guide track 51 so that movement of the sliding member and the rod 53 through the last portion of the guide track causes the coil spring 57 to compress and generates resistance. This final part of the movement, in turn, causes the projecting arm 43 to lift the golf bag 1 away from the chassis 3.

Referring now to Fig. 13, the projecting arm 43 is formed by a plastic, metal or metal alloy plate hinged to the lifting plate 41 at one end and secured to the handle column 7 by a pivotable connection at the opposite end, described as the free end above. The lifting plate 41 is also made from a plastic, metal or a metal alloy.

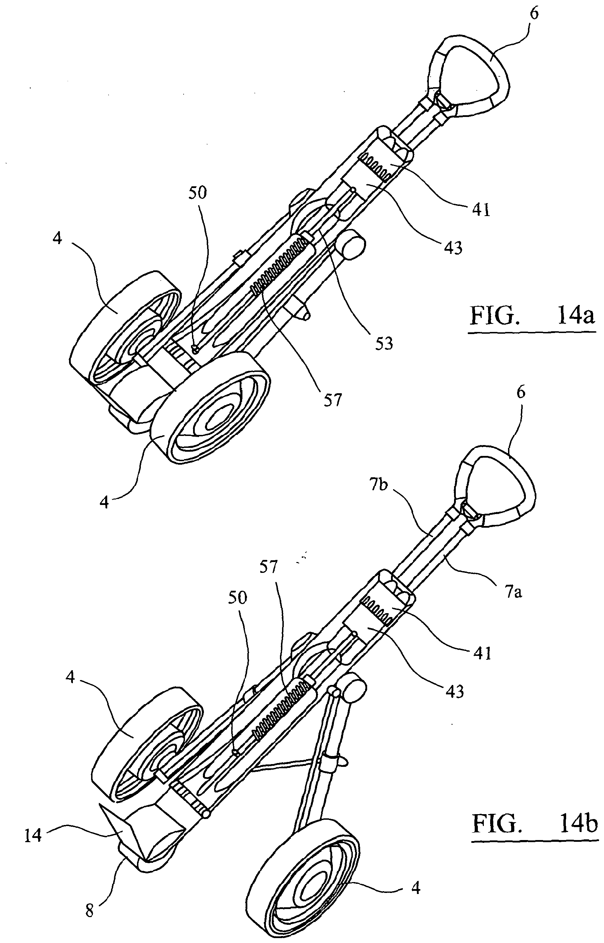

Referring now to Figure 14a, there is shown the combination of the golf trolley 2 and the golf bag 1 in the fully collapsed position. As shown, the brackets 17, 18 and twin links 19, 20 are stowed and therefore both co-axial wheels 4 are also in the stowed position. The handle column 7 is fully retracted and so the shafts 7a, 7b are located on either side of the guide track 51. In this collapsed condition, the combination 1, 2 has generally the same dimensions as a stand-alone golf bag.

Referring now to Figure 14b, the golf trolley 2 is shown in an intermediate position in which the handle column 7 has been pulled causing the trolley 2 to expand. The sliding member 49 slides on the guide track 51 causing the shafts 7a, 7b to move upwards relative to the guide track 51 and the entire handle column 7. The lug slides along the opening 52 so that the rod 53 is also moved upwards relative to the guide track 51 and the main body 13. The brackets 17, 18 and twin links 19, 20 start unfolding and, as a result, the co-axial wheels 4 move outwardly and back relative to the golf bag 1. At this point the main body part 13 and the handle column 7 are still largely parallel to the rear part of the golf bag as the rod 53 has not reached the end of the guide track 51.

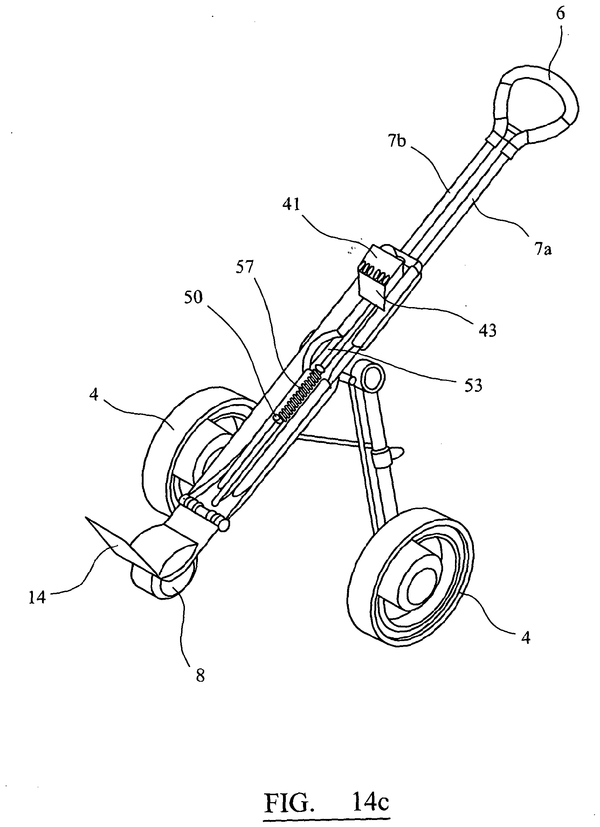

Referring now to Figure 14c, the golf trolley is shown in a nearly operational position, at around an 80% extension. In this condition, the projecting arm 43 is pushed upwards by the bearing and rotates around the hinge 45 to cause the top part of the handle column 7 to move away at an angle from the rear of the golf bag 1 thereby causing bottom part of the main body 13 to rotate around the second hinge 47. The action of the projecting arm 43 and the resulting space clearance means that the handle 6 remains clear of any golf clubs stored in the golf bag 1. The angle between the main body 13 or the handle column 7 and the rear of the golf bag shown in this embodiment set at a predetermined degree.

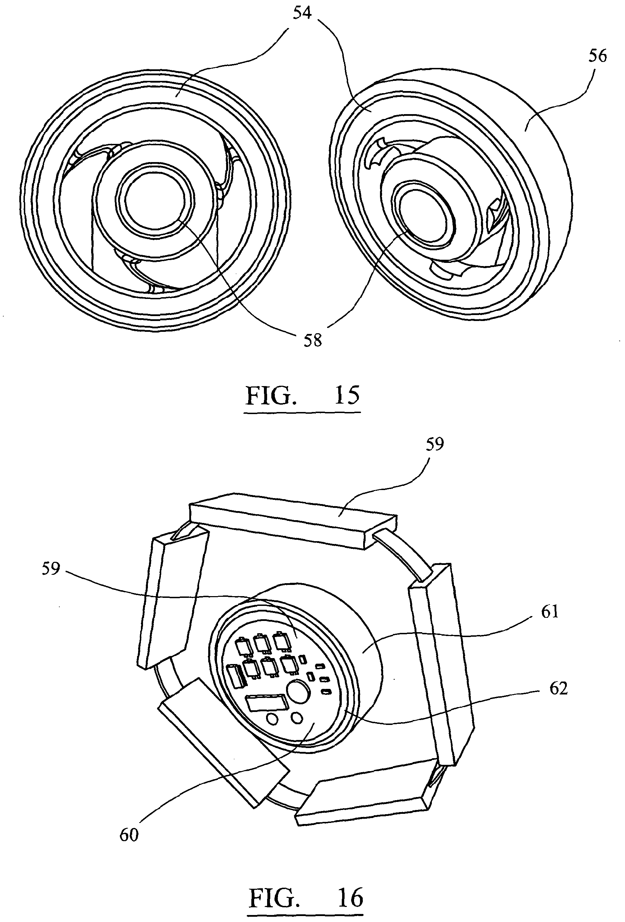

Referring now to Figures 15 and 16 there is shown a further aspect of the invention of a wirelessly controllable co-axial wheel 54 incorporating an electric motor, which wirelessly controllable co-axial wheel 54 is suitable for powering a combination as described in relation to the first and second embodiments of the invention. The wirelessly controllable co-axial wheel 54 may be controlled by a wireless controller described in further detail below. The wirelessly controllable co-axial wheel 54 is a one-piece motorised wheel having a housing 56 and a hub cap 58. The housing 56 comprises at least one battery 59 arranged to provide power from the battery unit 16, a motor for generating energy to be converted into motion, a motor controller 60 arranged to follow any commands sent by a wireless controller and a receiver or antenna 62 arranged to receive any signals sent from the wireless controller through a transmitter. The motor is mounted in the housing 56 coaxially with the axis of the wheel 54. The at least one battery is mounted within the periphery of the wheel 54.

The electric motor can be controlled by a wireless controller having a transmitter arranged to communicate with a receiver on each wirelessly controllable co-axial wheel 54 to control movement of the respective co-axial wheel 54.

Although the second embodiment has been described as having a lifting plate, a projecting arm and a hinge which allows the main body or any other pivoting means suitable to move away the golf bag from the chassis of the golf trolley could be used. For example, the gold bag could be attached to the golf trolley by a first pair of a lifting plate and projecting arm located at the handle column end closer to the open end of the bag as described above, i.e. the top end, and a second pair of lifting plate and projecting arm located at the handle column end closer to the base of the golf bag. The second projecting arm may be shorter in length than the first projecting arm; moreover, the first and second projecting arms may be pulled from the lifting plate in one motion. Alternatively, a spring, such as a leaf spring or a gas spring may be used instead of the second projecting arm and lifting plate.

Moreover, the back plate of the chassis which is connected to the rear of the golf bag could be replaced with a simple stiffened portion of material.

While the battery has been described as located in the base member in relation to the first embodiment of the invention and in the wheels in relation to the second embodiment of the invention, the battery may be located in the base member, in the wheels, on the back of the handle column or in the golf bag instead. Although the battery has been described as being a 36 volts Lithium-ion battery, any other suitable battery could also be used.

Further, a mobile application could be used instead of the controller described in relation to Figures 15 and 16. Further, a controller or mobile application may also be used with the first embodiment of the invention.

It should be noted that, in motorised embodiments, each wheel may be motorised, or alternatively, only one wheel may be provided with a motor.

Although the lifting plate and projecting arm have been described as made from plastic, metal or a metal alloy, other suitable materials could also be used. Moreover, the projecting arm can be modified to open at any particular time during the trolley opening action. In addition, the angle between the golf bag and the handle column in the extended position could be varied.

## Claims

1. A combination of a golf trolley (2) and a golf bag (1) adapted to carry a set of clubs, the golf trolley (2) having a chassis member (3) comprising a main body part (13) and a base plate (14) adapted to support or form part of a base member of the golf bag (1), a handle (6) connected to a handle column (7) adapted to be slidable longitudinally relative to the chassis member (3) along a path between an operational and a collapsed position, the golf trolley (2) having a pair of substantially co-axial spaced wheels (4) each connected to the chassis member (3) by a linkage arrangement (5, 19, 20), which linkage arrangement (5, 19, 20) is movable between an operational position and a collapsed position adjacent to the chassis member (3), each linkage arrangement (5, 19, 20) having a further link (27) connecting an intermediate point on the respective linkage arrangement (5, 19, 20) to a lower end of the handle column (7), wherein when the handle (6) is lowered to the collapsed position each further link (27) draws the respective linkage arrangement (5, 19, 20) to a point wherein each linkage arrangement (5, 19, 20) and each further link (27) lies substantially parallel to the main body part (13) and the wheels (4) are in a closed position adjacent to the chassis member (3) overlapping opposite sides of the golf bag (1), wherein a lateral cross section of the golf bag (1) has a tapered section (30) intermediate a length of the golf bag (1) leading to a lower section of reduced cross section (31), the substantially co-axial spaced wheels (4) in their collapsed position being positioned adjacent the reduced cross section part (31) of the golf bag (1) overlapping sides of the golf bag (1) to lie substantially within an overall envelope of the golf bag (1) **characterised in that**
the golf bag (1) is movable away from the chassis member (3) so that, when the golf trolley (2) is in the operational position, an upper open end (9) of the golf bag (1) is clear from the handle (6).

2. A combination according to claim 1, wherein a lower part of the chassis member (3) remote from the handle (6) incorporates a ground engaging element comprising a further wheel (8) rotatably mounted on the chassis member and spaced from an axis of the substantially co-axial spaced wheels (4), when in the operational position.

3. A combination according to claim 1, 2 or 3, wherein for each substantially co-axial spaced wheel (4), the linkage arrangement (5, 19, 20) comprises a twin linkage arrangement (19, 20) connected to a hub (23) of the substantially co-axial spaced wheel (4), the hub (23) having a generally radially extending lug (22), which generally radially extending lug (22) extends in the operational position of the trolley (2) towards the ground, the twin linkage arrangement (19, 20) being connected to an outer end of the lug (22) remote from the axis.

4. A combination according to any preceding claim, wherein the chassis member (3) comprises a lifting arm (43) arranged to pivot the upper open end (9) of the golf bag (1) away from the chassis (3) and the handle column (7) when the handle column (7) is extended in to the operational position so that the handle (6) remains clear of the upper open end (9) of the golf bag (1).

5. A combination according to claim 4, wherein the lifting arm (43) is pivotable around a first hinge (45) in relation to a lifting plate (41).

6. A combination according to claims 4 or 5, wherein the chassis member (3) is provided with a second hinge (47) arranged to pivotably secure the lower rear end of the golf bag (1) to the handle column (7).

7. A combination according to any preceding claim, wherein at least one of the substantially co-axial spaced wheels (4) incorporates an electric motor arranged to drive the golf trolley (2), motive power in the form of a battery (16) being located adjacent to the lower most part of the chassis member.

8. A combination according to claim 8, wherein the electric motor is mounted in the hub (23).

9. A combination according to any preceding claim, wherein the golf bag (1) further includes detachable cover elements (11) adapted to be secured to the main body (29) of the golf bag (1) to enclose the co-axial wheels (4) when the co-axial wheels (4) are in a collapsed position.

10. A combination according to any preceding claim, wherein the handle (6) is shaped so that when in the collapsed position, the handle (6) lies nested on or adjacent the upper open end (9) of the bag (1) to lie substantially within the overall envelope of the bag.

11. A combination according to any preceding claim, wherein the substantially co-axial spaced wheels (4) are each formed of a one-piece plastics moulding and comprises a hub (23) and a rim (24) joined by a plurality of curved spokes (25), which plurality of curved spokes (25) are resilient to provide an integral suspension element.

12. A combination according to claim 13 or claim 14, wherein each rim (24) carries a tyre formed from a plurality of similar or identical elongate sections secured to the respective rim (24).

13. A combination according to any preceding claim, wherein the golf trolley (2) and golf bag (1) is moved from the fully collapsed position to the fully operational position by a single linear movement of the handle (6).

14. A combination according to claim 7, claim 8 or claims 9 to 13 when dependent on claim 7 or claim 8, further comprising a controller arranged to wirelessly communicate and control the co-axial wheels (4).

## Patentansprüche

1. Kombination aus Golfwagen (2) und Golftasche (1) zum Tragen eines Satzes von Schlägern, wobei der Golfwagen (2) ein Fahrgestellelement (3) mit einem Hauptkörperteil (13) und einer zum Abstützen oder zur Bildung eines Teils eines Grundelements der Golftasche (1) ausgebildeten Grundplatte (14) und einen Griff (6) an einer Griffstange (7) aufweist, der in Längsrichtung relativ zum Fahrgestellelement (3) entlang einer Bahn zwischen einer Einsatzstellung und einer Klappstellung verschiebbar ist, wobei der Golfwagen (2) ein Paar von im Wesentlichen koaxialen beabstandeten Rädern (4) aufweist, die jeweils von einer Gestängeanordnung (5, 19, 20) mit dem Fahrgestellelement (3) verbunden sind, die zwischen einer Einsatzstellung und einer Klappstellung neben dem Fahrgestellelement (3) bewegbar ist, wobei jede Gestängeanordnung (5, 19, 20) ein weiteres Glied (27) aufweist, das eine Zwischenstelle an der jeweiligen Gestängeanordnung (5, 19, 20) mit einem unteren Ende der Griffstange (7) verbindet, wobei, wenn der Griff (6) in die Klappstellung abgesenkt wird, ein jedes weiteres Glied (27) die jeweilige Gestängeanordnung (5, 19, 20) an eine Stelle zieht, in der eine jede Gestängeanordnung (5, 19, 20) und ein jedes weiteres Glied (27) im Wesentlichen parallel zum Hauptkörperteil (13) liegen und die Räder (4) in einer Schließstellung neben dem Fahrgestellelement (3) sind und einander gegenüber liegende Seiten der Golftasche (1) überdecken, wobei ein seitlicher Querschnitt der Golftasche (1) einen verjüngten Abschnitt (30) in der Mitte einer Längserstreckung der Golftasche (1) aufweist, der zu einem unteren Abschnitt von geringerem Querschnitt (31) führt, wobei die im Wesentlichen koaxialen beabstandeten Rädern (4) in ihrer Klappstellung neben dem Abschnitt von geringerem Querschnitt (31) der Golftasche (1) angeordnet sind und die Seiten der Golftasche (1) überdecken, so dass sie im Wesentlichen innerhalb einer allgemeinen Hüllkurve der Golftasche (1) liegen,
**dadurch gekennzeichnet, dass**
die Golftasche (1) so vom Fahrgestellelement (3) wegbewegt werden kann, dass, wenn der Golfwagen (2) in Einsatzstellung ist, ein oberes Ende der Golftasche (1) vom Griff (6) frei ist.

2. Kombination nach Anspruch 1, wobei ein vom Griff (6) abgewandter unterer Teil des Fahrgestellelements (3) ein Bodeneingriffselement umfasst, das aus einem weiteren Rad (8) besteht, das drehbar am Fahrgestellelement angebracht und in der Einsatzstellung von einer Achse der im Wesentlichen koaxialen beabstandeten Räder (4) beabstandet ist.

3. Kombination nach Anspruch 1, 2 oder 3, wobei für ein jedes im Wesentlichen koaxiales beabstandetes Rad (4) die Gestängeanordnung (5, 19, 20) eine Doppel-Gestängeanordnung (19, 20) umfasst, die mit einer Nabe (23) des im Wesentlichen koaxialen beabstandeten Rades (4) verbunden ist, wobei die Nabe (23) eine im Allgemeinen radial verlaufende Lasche (22) aufweist, die sich in der Einsatzstellung des Wagens (2) in Richtung des Bodens erstreckt, wobei die Doppel-Gestängeanordnung (19, 20) mit einem äußeren, von der Achse abgewandten Ende der Lasche (22) verbunden ist.

4. Kombination nach einem der vorhergehenden Ansprüche, wobei das Fahrgestellelement (3) einen Hubarm (43) aufweist, der zum Wegschwenken des oberen offenen Endes (9) der Golftasche (1) vom Fahrgestell (3) und von der Griffstange (7) ausgelegt ist, wenn die Griffstange (7) in Einsatzstellung ausgezogen ist, so dass der Griff (6) vom oberen offenen Ende (9) der Golftasche (1) frei bleibt.

5. Kombination nach Anspruch 4, wobei der Hubarm (43) um ein erstes Scharnier (45) im Verhältnis zu einer Hubplatte (41) schwenkbar ist.

6. Kombination nach Anspruch 4 oder 5, wobei das Fahrgestellelement (3) mit einem zweiten Scharnier (47) ausgestattet ist, das zur schwenkbaren Befestigung des unteren hinteren Endes der Golftasche (1) an der Griffstange (7) ausgelegt ist.

7. Kombination nach einem der vorhergehenden Ansprüche, wobei mindestens eines der im Wesentlichen koaxialen beabstandeten Räder (4) einen Elektromotor enthält, der zum Antrieb des Golfwagens (2) ausgelegt ist, wobei die Antriebskraft in der Form einer Batterie (16) neben dem untersten Teil des Fahrgestellelements angeordnet ist.

8. Kombination nach Anspruch 8, wobei der Elektromotor in de Nabe (23) angeordnet ist.

9. Kombination nach einem der vorhergehenden Ansprüche, wobei die Golftasche (1) weiter abnehmbare Abdeckelemente (11) umfasst, die zur Befestigung am Hauptkörper (29) der Golftasche (1) ausgelegt sind, um die koaxialen Räder (4) in ihrer Klappstellung zu umschließen.

10. Kombination nach einem der vorhergehenden Ansprüche, wobei der Griff (6) so geformt ist, dass er in der Klappstellung mit dem obene offenen Ende (9) der Tasche (1) verschachtelt ist oder daneben liegt, so dass er im Wesentlichen innerhalb der allgemeinen Hüllkurve der Tasche liegt.

11. Kombination nach einem der vorhergehenden Ansprüche, wobei die im Wesentlichen koaxialen beabstandeten Räder (4) jeweils aus einem einteiligen Kunststoff-Formteil gebildet sind und eine Nabe (23) und eine Felge (24) umfassen, die von einer Vielzahl von gekrümmten Speichen (25) miteinander verbunden sind, wobei die Vielzahl von gekrümmten Speichen (25) zur Bereitstellung eines eingebauten Aufhängungselements elastisch sind.

12. Kombination nach Anspruch 13 oder 14, wobei eine jede Felge (24) einen Reifen trägt, der aus einer Vielzahl von ähnlichen oder gleichen an der jeweiligen Felge (24) befestigten länglichen Abschnitten besteht.

13. Kombination nach einem der vorhergehenden Ansprüche, wobei der Golfwagen (2) und die Golftasche (1) durch eine einzige Linearbewegung des Griffes (6) aus der völligen Klappstellung in die völlige Einsatzstellung gebracht werden.

14. Kombination nach Anspruch 7, Anspruch 8 oder Ansprüchen 9 bis 13 in Abhängigkeit von Anspruch 7 oder Anspruch 8, weiter umfassend ein Steuergerät, das zur drahtlosen Kommunikation und zur Steuerung der koaxialen Räder (4) ausgelegt ist.

## Revendications

1. Combinaison d'un chariot de golf (2) et un sac de golf (1) adapté à porter un ensemble de clubs, le chariot de golf (2) ayant un élément (3) de châssis comprenant une partie de corps principal (13) et une plaque de base (14) adapté à supporter ou à forme rune partie d'un élément de base du sac de golf (1), une poignée (6) reliée à une colonne de poignée (7) adaptée à pouvoir se coulisser longitudinalement par rapport à l'élément de châssis (3) le long d'une voie entre une position opérationnelle et repliée, le chariot de gold (2) ayant une paire de roues (4) espacées sensiblement coaxialement, chacune reliée à l'élément de châssis (3) par un système de liaison (5, 19, 20), ledit système de liaison (5, 19, 20) étant mobile entre une position opérationnelle et une position repliée adjacente à l'élément de châssis (3), chaque système de liaison (5, 19, 20) ayant une autre liaison (27) reliant un point intermédiaire sur le système de liaison respectif (5, 19, 20) à une extrémité inférieure de la colonne de poignée (27), lorsque la poignée (6) est abaissée dans la position repliée, chaque autre liaison (27) tire le système de liaison respectif (5, 19, 20) vers un point auquel chaque système de liaison (5, 19, 20) et chaque autre liaison (27) sont parallèle à la partie de corps principal (13) et les roues (4) sont en position fermée, adjacentes à l'élément de châssis (3) chevauchant les côtés opposés du sac de gold (1), une section transversale latérale du sac de golf (1) ayant une section conique (30), une longueur intermédiaire du sac de golf (1) menant à une partie inférieure de la section transversale réduire (31), les roues (4) espacées sensiblement coaxialement (4) dans leur position repliée étant positionnées adjacentes à la partie de section transversale réduite (31) du sac de golf (1) chevauchant les côtés du sac de golf (1) pour s'étendre sensiblement à l'intérieur de toute l'enveloppe du sac de golf (1), **caractérisée en ce que** le sac de golf (1) peut se déplacer dans le prolongement de l'élément de châssis (3) de sorte que, lorsque le chariot de golf (2) est dans la position opérationnelle, une extrémité ouverte supérieure (9) du sac de golf (1) se libère de la poignée (6).

2. Combinaison selon la revendication 1, une partie inférieure de l'élément de châssis (3) à distance de la poignée (6) incorpore un élément de mise en prise dans le sol comprenant une autre roue (8) montée en rotation sur l'élément de châssis et espacée d'un axe des roues espacées sensiblement coaxialement (4), lorsqu'elles sont dans la position opérationnelle.

3. Combinaison selon la revendication 1, 2, 3, pour chaque roue espacée sensiblement coaxialement (4), le système de liaison (5, 19, 20) comprenant un double système liaison (19, 20) relié à un moyeu (23) de la roue espacée sensiblement coaxialement (4), le moyeu (23) ayant une oreille (22) s'étendant généralement radialement, ladite oreille (22) s'étendant généralement radialement s'étendant dans la position opérationnelle du chariot (2) en direction du sol, le double système de liaison (19, 20) étant relié à une extrémité extérieure de l'oreille (22) à distance de l'axe.

4. Combinaison selon l'une quelconque des revendications précédentes, l'élément de châssis (3) comprenant un bras de levage (43) conçu pour pivoter l'extrémité ouverte supérieure (9) du sac de golf (1) à distance du châssis (3) et de la colonne de poignée (7) lorsque la colonne de poignée (7) est étendue dans la position opérationnelle de sorte que la poignée (6) reste libérée de l'extrémité ouverture supérieure (9) du sac de golf (1).

5. Combinaison selon la revendication 4, le bras de levage (43) peut pivoter autour d'une première charnière (45) en relation avec une plaque de levage (41).

6. Combinaison selon les revendications 4 ou 5, l'élément de châssis (3) étant doté d'une seconde charnière (47) conçue pour fixer en pivotement l'extrémité arrière inférieure du sac de golf (1) à la colonne de poignée (7).

7. Combinaison selon l'une quelconque des revendications précédentes, au moins l'une des roues espacées sensiblement coaxialement (4) incorporant un moteur électrique conçu pour entraîner le chariot de golf (2), la puissance motrice sous la forme d'une batterie (16) étant située adjacente à la partie la plus inférieure de l'élément de châssis.

8. Combinaison selon la revendication 8, le moteur électrique étant monté dans le moyeu (23).

9. Combinaison selon l'une quelconque des revendications précédentes, le sac de golf (1) comportant en outre des éléments (11) de couvercle conçus pour être fixés au corps principal (29) du sac de golf (1) pour renfermer les roues coaxiales (4) lorsque les roues coaxiales (4) sont dans une position repliée.

10. Combinaison selon l'une quelconque des revendications précédentes, la poignée (6) est formée de sorte que dans la position repliée, la poignée (6) est emboîtée sur ou à côté de la partie ouverte supérieure (9) du sac (1) pour s'étendre sensiblement dans toute l'enveloppe du sac.

11. Combinaison selon l'une quelconque des revendications précédentes, les roues espacées sensiblement coaxialement (4) sont chacune en moulage de plastique d'un seul tenant et comprenant un moyeu (23) et un bord (24) relié par une pluralité de rayons incurvés (25), la pluralité de rayons incurvés (25) sont élastiques pour fournir un élément de suspension intégral.

12. Combinaison selon la revendication 13 ou la revendication 14, chaque bord (24) porte un pneu constitué d'une pluralité de sections allongées similaires ou identiques fixés au bord respectif (24).

13. Combinaison selon l'une quelconque des revendications précédentes, le charriot de golf (2) et le sac de golf (1) est déplacé d'une position entièrement repliée à la position entièrement opérationnelle par un seul mouvement linéaire de la poignée (6).

14. Combinaison selon la revendication 7, la revendication 8 ou les revendications 9 à 13 lorsqu'elles sont dépendantes de la revendication 7 ou la revendication 8, comprenant en outre un organe de commande conçu pour la communication sans fil et la commande des roues coaxiales (4).
